(19) Europäisches Patentamt
European Patent Office
Office européen des brevets

(11) **EP 4 503 303 A1**

(12) **EUROPEAN PATENT APPLICATION**
published in accordance with Art. 153(4) EPC

(43) Date of publication:
**05.02.2025 Bulletin 2025/06**

(21) Application number: 23779616.4

(22) Date of filing: **15.03.2023**

(51) International Patent Classification (IPC):
$H01M\ 50/44^{(2021.01)}$  $H01M\ 10/052^{(2010.01)}$
$H01M\ 10/0562^{(2010.01)}$  $H01M\ 50/429^{(2021.01)}$
$H01M\ 50/489^{(2021.01)}$  $H01M\ 50/491^{(2021.01)}$

(52) Cooperative Patent Classification (CPC):
**H01M 10/052; H01M 10/0562; H01M 50/429;
H01M 50/44; H01M 50/489; H01M 50/491;
Y02E 60/10**

(86) International application number:
**PCT/JP2023/010066**

(87) International publication number:
**WO 2023/189598 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022 JP 2022051605**

(71) Applicant: **Nippon Kodoshi Corporation
Kochi-shi, Kochi 781-0395 (JP)**

(72) Inventors:
• **MORIMOTO, Kenta**
  **Kochi-shi Kochi 781-0395 (JP)**
• **OGAWA, Kentaro**
  **Kochi-shi Kochi 781-0395 (JP)**
• **KUROIWA, Masahiro**
  **Kochi-shi Kochi 781-0395 (JP)**

(74) Representative: **Betten & Resch
Patent- und Rechtsanwälte PartGmbB
Maximiliansplatz 14
80333 München (DE)**

(54) **SECONDARY BATTERY SUPPORT BODY AND SECONDARY BATTERY**

(57)    Provided is a secondary battery support body which makes it possible to obtain a solid electrolyte layer having low resistance and achieve reduction in interface resistance between the solid electrolyte layer and a positive electrode or a negative electrode. This secondary battery support body is included in a solid electrolyte layer of a secondary battery, and is made of paper or nonwoven fabric having a porosity of 60-90% and a specific surface area per unit volume of 0.1-1.0 $m^2/cm^3$.

**EP 4 503 303 A1**

**Description**

Technical Field

The present invention relates to a secondary battery support body included in a solid electrolyte layer interposed between a positive electrode and a negative electrode of a secondary battery, and a secondary battery including the solid electrolyte layer having the support body.

Background Art

As a secondary battery having a high energy density, a lithium ion secondary battery using a liquid electrolyte (hereinafter, an electrolytic solution) is used. A lithium ion secondary battery using an electrolytic solution has a configuration in which a separator is interposed between a positive electrode and a negative electrode and filled with an electrolytic solution.

In a lithium ion secondary battery, an organic electrolytic solution is mainly used as an electrolytic solution. The organic electrolytic solution may cause liquid leakage due to being liquid or ignition due to being flammable. Therefore, in order to enhance the safety of the lithium ion secondary battery, a secondary battery (hereinafter, an all-solid-state battery) using a solid electrolyte instead of an electrolytic solution has been developed. As a matter of course, since the electrolyte is solid, there is no liquid leakage, and the all-solid-state battery has higher flame retardancy and heat resistance than the electrolytic solution, and thus the all-solid-state battery has attracted attention as a secondary battery having excellent safety. Since all-solid-state batteries have high safety, small all-solid-state batteries for wearable devices that directly touch the skin or the like are mass-produced.

In addition, unlike a lithium ion secondary battery using an electrolytic solution, the all-solid-state battery is a battery having small property degradation at a high temperature, and thus the all-solid-state battery is a secondary battery that does not require a cooling apparatus and is also advantageous for improvement of energy density per volume of the battery pack. From the viewpoint of being advantageous as a secondary battery having a high volume energy density, the all-solid-state battery is expected to be further increased in size for electric vehicles and the like.

Unlike a secondary battery using an electrolytic solution, in an all-solid-state battery, a solid electrolyte layer is interposed between a positive electrode and a negative electrode, not a separator filled with the electrolytic solution. For example, in the case of a lithium ion all-solid-state battery, lithium ions pass from the positive electrode through the solid electrolyte layer to the negative electrode during charging. On the other hand, during discharging, lithium ions pass from the negative electrode through the solid electrolyte layer to the positive electrode.

As described above, in the case of an all-solid-state battery, not only lithium ions but also various ion species such as sodium ions have been studied as ion (hereinafter, carrier ions) species conducting between the positive electrode and the negative electrode from the viewpoint of avoiding the problem of stable supply of resources.

That is, the solid electrolyte layer interposed between the positive electrode and the negative electrode of the all-solid-state battery is required to have a function of conducting carrier ions between the positive electrode and the negative electrode and a function of preventing a short circuit between the positive electrode active material and the negative electrode active material. In addition, the solid electrolyte layer is required to have a small thickness in order to have excellent volume energy density and low internal resistance.

Examples of the method for forming the solid electrolyte layer include a method in which a solid electrolyte and a binder are mixed and rolled under heating to form a sheet, and a method in which a solid electrolyte slurry is applied onto an electrode and dried.

However, in the case of forming a solid electrolyte layer for an all-solid-state battery used for a large battery such as for an electric vehicle, for example, a solid electrolyte layer obtained by a method of rolling under heating to form a sheet is broken or cracked during handling.

In addition, when a method of coating a slurry containing a solid electrolyte on an electrode and drying the slurry is used, strain is generated in the solid electrolyte layer during drying, and cracks are generated. Therefore, it is difficult to stably form a thin and uniform solid electrolyte layer. If a stable thin and uniform solid electrolyte layer cannot be formed, ion conduction is deteriorated, and furthermore, a short circuit occurs.

Meanwhile, in order to prevent a short circuit, the thickness of the solid electrolyte layer can be increased, but in a case where the thickness is large, the size of the battery increases, the volume energy density decreases, the inter-electrode distance increases, and the internal resistance increases.

In order to solve the above problems, it is known to use a solid electrolyte layer in which a solid electrolyte is contained in a thin-film sheet (hereinafter, support body) and the solid electrolyte and a support body are integrated in an all-solid-state battery. Further, various configurations relating to a support body for an all-solid-state battery and a nonwoven fabric base material for a lithium secondary battery separator have been proposed (see, for example, Patent Literatures 1 to 6).

Citation List

Patent Literature

Patent Literature 1: JP 2017-103146 A
Patent Literature 2: JP 2016-31789 A
Patent Literature 3: JP 2020-77488 A
Patent Literature 4: JP 2020-24860 A
Patent Literature 5: JP 2020-161243 A
Patent Literature 6: JP 2018-88375 A

Summary of Invention

Technical Problem

Patent Literature 1 discloses a technique related to a solid electrolyte sheet having a plurality of through holes formed by etching a film serving as a support body. It is disclosed that an all-solid-state battery having excellent energy density and output properties can be provided by filling a through hole formed by etching with a solid electrolyte.

However, in the case of producing the solid electrolyte sheet of Patent Literature 1, since the through holes are filled with the solid electrolyte, the solid electrolyte is filled only inside the formed through holes. Therefore, since the film portion that is an insulator remains except for the through hole, an interface that does not allow passage of carrier ions is generated between the positive electrode or the negative electrode and the film portion.

That is, the interface resistance between the solid electrolyte sheet and the positive electrode or the negative electrode tends to be high, and even in an all-solid-state battery using this support body, it has been required to further reduce the resistance of the all-solid-state battery.

Patent Literature 2 discloses a technique related to a nonwoven fabric which is a solid electrolyte sheet containing a solid electrolyte on the surface and inside of a nonwoven fabric and in which the weight per square meter of the nonwoven fabric to be used is 8 g or less and the thickness is 10 to 25 $\mu$m.

The solid electrolyte layer formed using the nonwoven fabric described in Patent Literature 2 as a support body can retain the solid electrolyte required for ion conduction between the positive electrode and the negative electrode while having self-standing property, and can produce a battery in which an increase in impedance is suppressed.

Patent Literature 3 discloses a technique related to a solid electrolyte sheet in which a support body having a porosity of 60% or more and 95% or less, a thickness of 5 $\mu$m or more and less than 20 $\mu$m, and heat resistance is filled with a solid electrolyte. It is disclosed that this solid electrolyte sheet has self-standing property even though the thickness is thin, and is excellent in heat resistance, so that a short circuit can be prevented even when pressing is performed at a high temperature. In addition, it is disclosed that the solid electrolyte sheet can sinter the solid electrolyte by high temperature pressing, and as a result, the interface resistance can be reduced and the output of the battery can be improved.

However, although the support bodies described in Patent Literature 2 and Patent Literature 3 are support bodies having sufficient voids, in a case where the support body forming material contains thin fibers, the support body has a dense structure. As a result, the solid electrolyte slurry cannot be permeated into the support body, filling of the solid electrolyte into the support body is insufficient, and the battery has high internal resistance.

Further, in the support body described in Patent Literature 2 or Patent Literature 3, in a case where the number of fibers as a support body constituent material is small, the contact area between the support body constituent material and the solid electrolyte is reduced. As a result, when the solid electrolyte slurry is permeated into the support body, the solid electrolyte slurry cannot stay in the support body, and the effect of using the support body cannot be sufficiently exhibited, leading to generation of cracks. As a result, the solid electrolyte layer has high resistance.

Patent Literature 4 discloses a technique related to a nonwoven fabric for supporting a solid electrolyte containing 2 mass% or more and 40 mass% or less of fibrillated heat-resistant fibers and containing synthetic resin fibers. This nonwoven fabric for supporting a solid electrolyte is disclosed to have a small thickness, high tensile strength, and excellent process traveling performance when a coating liquid containing a solid electrolyte is applied.

However, in the nonwoven fabric for supporting a solid electrolyte of Patent Literature 4, similarly to Patent Literature 2 and Patent Literature 3, the solid electrolyte slurry may not be uniformly held due to the small contact area between the support body constituent material and the solid electrolyte, or the solid electrolyte in contact with the fiber surface inside the nonwoven fabric for supporting a solid electrolyte may be small, and cracks have occurred inside the solid electrolyte layer.

On the other hand, in order to uniformly hold the solid electrolyte slurry, the contact area between the support body and the solid electrolyte can be increased, that is, a large amount of fibrillated heat-resistant fibers can be mixed in the nonwoven fabric for supporting a solid electrolyte, or fibers sufficiently subjected to beating treatment can be mixed, but the permeability of the solid electrolyte slurry into the nonwoven fabric for supporting a solid electrolyte is deteriorated. As a result, the solid electrolyte layer is insufficiently filled with the solid electrolyte, and the resistance increases.

That is, it has been difficult to achieve both suppression of crack generation and permeability of the solid electrolyte slurry into the support body.

Patent Literature 5 discloses a technique related to a nonwoven fabric base material for a lithium secondary battery separator, which is characterized by containing unstretched polyester fibers and wet-heat-adhesive fibers as binder fibers.

The unstretched polyester fiber is softened or melted by a heat pressure treatment such as calender, and is firmly bonded to other fibers. Wet-heat-adhesive fibers are disclosed to flow or easily deform in a wet state to develop an adhesive function. It is disclosed that a nonwoven fabric base material for a lithium secondary battery separator having high tensile strength and high productivity can be provided by containing these binders in the nonwoven fabric base material.

However, since the wet-heat-adhesive fiber contained in the nonwoven fabric base material of Patent Literature 5 undergoes fluidization or deformation in a case of exhibiting an adhesive function as described above, the wet-heat-adhesive fiber in the nonwoven fabric base material cannot maintain a fiber state, and voids inside the support body may be filled. Furthermore, when a large amount of binder fibers that cannot retain the fiber shape are contained, the density increases. As a result, the solid electrolyte slurry insufficiently permeates into the nonwoven fabric base material, and it is difficult to uniformly fill the nonwoven fabric base material with the solid electrolyte, so that the battery has high internal resistance.

In addition, as a related technique, a technique related to a separator for an alkaline battery which can uniformly hold an electrolytic solution and is excellent in retention of the electrolytic solution is disclosed.

Patent Literature 6 discloses a technique related to a separator for an alkaline battery characterized in that the specific surface area of the separator is 0.80 $m^2$/g or more, and it is described that the wider the specific surface area, the better the retention of an electrolytic solution. Therefore, it is disclosed that the separator for an alkaline battery described in Patent Literature 6 has a wide area that can be brought into contact with an electrolytic solution, and thus has excellent electrolyte solution retention.

However, the wider the specific surface area of the separator, the higher the frequency of contact between the fibers constituting the separator and the substance to be permeated, and thus, it is difficult for the substance to be permeated to permeate into the separator. For example, when the separator of Patent Literature 6 is used as a support body for an all-solid-state battery, permeability of the solid electrolyte slurry into the separator is poor, that is, the solid electrolyte does not enter the separator, so that the solid electrolyte that can be held by the separator is reduced, and the battery has high internal resistance.

In addition, when the separator of Patent Literature 6 is thin and has a low basis weight like an all-solid-state battery support body that can withstand practical use, the mechanical strength is weakened, and the solid electrolyte slurry cannot be uniformly applied.

The present invention has been made in view of the above problems, and an object of the present invention is to form a solid electrolyte layer in which a required amount of a solid electrolyte is filled inside a support body by using a support body having voids that can be filled with a required amount of a solid electrolyte, and to obtain a solid electrolyte layer having low resistance. Furthermore, it is an object of the present invention to suppress cracks generated inside the solid electrolyte layer and contribute to reduction in resistance of the solid electrolyte layer by controlling the contact area between the support body constituent fibers and the solid electrolyte. In addition, it is an object of the present invention to obtain a solid electrolyte layer with low resistance and to contribute to reduction of interface resistance between a positive electrode or a negative electrode and a solid electrolyte layer by using paper or a nonwoven fabric as a support body so that the surface and the inside of the support body can be filled with a solid electrolyte and a good pass line of carrier ions is formed.

In addition, another object of the present invention is to provide a secondary battery having low internal resistance by using the support body.

Solution to Problem

The support body according to the present invention has been made to solve the above problems, and has, for example, the following configuration.

That is, the support body is paper or nonwoven fabric included in a solid electrolyte layer of a secondary battery, the support body having a porosity of 60 to 90% and a specific surface area per volume in a range of 0.1 to 1.0 $m^2$/$cm^3$.

In addition, the secondary battery of the present invention includes a solid electrolyte layer having the above-described support body of the present invention.

Advantageous Effects of Invention

According to the present invention described above, by setting the porosity of the support body to the range of 60 to 90%, it is possible to obtain a support body having voids in which a required amount of the solid electrolyte can be filled in the support body, and a solid electrolyte layer having low resistance can be obtained.

In addition, by setting the specific surface area per volume of the support body to a range of 0.1 to 1.0 m$^2$/cm$^3$, the contact area between the support body constituent material and the solid electrolyte can be sufficiently secured, and the solid electrolyte can be uniformly held inside the support body, and the occurrence of cracks can be suppressed. As a result, a solid electrolyte layer having low resistance can be obtained.

In addition, by using a support body constituted by paper or a nonwoven fabric, a support body having a structure having various voids and through holes can be obtained. As a result, in the solid electrolyte layer using this support body, a pass line of carrier ions continuous in the thickness direction and the plane direction can be formed, a solid electrolyte layer having low resistance can be obtained, and a solid electrolyte layer contributing to reduction in interface resistance between the positive electrode or the negative electrode and the solid electrolyte layer can be obtained.

Description of Embodiments

Hereinafter, modes for carrying out the present invention will be described in detail.

In the present invention, a support body used for forming a solid electrolyte layer interposed between a positive electrode and a negative electrode in a secondary battery is constituted.

The support body of the present invention is a support body included in a solid electrolyte layer of a secondary battery, and is paper or a nonwoven fabric having a porosity of 60 to 90% and a specific surface area per volume in a range of 0.1 to 1.0 m$^2$/cm$^3$.

The solid electrolyte layer interposed between the positive electrode and the negative electrode is required that carrier ions conduct between the positive electrode and the negative electrode during charging and discharging. For this purpose, a pass line of carrier ions needs to be formed between the positive electrode and the solid electrolyte layer, inside the solid electrolyte layer, and between the solid electrolyte layer and the negative electrode. That is, if the interface resistance between the positive electrode and the solid electrolyte layer and between the solid electrolyte layer and the negative electrode can be reduced and the resistance inside the solid electrolyte layer can be reduced, the internal resistance of the all-solid-state battery can be reduced.

In order to lower the resistance of the solid electrolyte layer using the support body, the support body constituting the solid electrolyte layer is required to have voids enough to be sufficiently filled with the solid electrolyte.

The support body of the present invention preferably has a porosity in a range of 60 to 90%. More preferably, the porosity is in the range of 65 to 85%.

In a case where the porosity of the support body is less than 60%, if the solid electrolyte slurry is permeated into the support body, the solid electrolyte slurry is clogged in the support body, and cannot be uniformly filled in the thickness direction of the support body. As a result, the resistance of the solid electrolyte layer increases.

On the other hand, in a case where the porosity is more than 90%, since there are many voids and there is little support body constituent material, the solid electrolyte cannot remain in the support body, and the solid electrolyte is unevenly filled not only in the thickness direction but also in the plane direction. Furthermore, the reinforcing effect of the solid electrolyte layer by the support body cannot be obtained, leading to generation of cracks.

In the conventional support body, as one factor that inhibits further reduction of the resistance of the solid electrolyte layer, it has been found that since the contact area between the support body constituent material and the solid electrolyte is small, the reinforcing effect of the solid electrolyte layer by the support body cannot be sufficiently obtained, and cracks are generated inside the solid electrolyte layer. When the contact area between the support body constituent material and the solid electrolyte is small, the solid electrolyte slurry cannot be uniformly held in the support body when the solid electrolyte slurry is permeated into the support body, and a crack occurs in the solid electrolyte layer.

When a crack occurs inside the solid electrolyte layer, a pass line of carrier ions inside the solid electrolyte layer is cut, and resistance increases. In this crack inside the solid electrolyte layer, strain was generated inside the solid electrolyte layer when the solid electrolyte slurry was dried, and a crack was generated, similarly to the case where the support body was not used.

Meanwhile, in order to suppress this crack, the contact area between the support body constituent material and the solid electrolyte can be increased, but clogging occurs inside the support body, and the permeation of the solid electrolyte slurry from the surface of the support body into the support body is inhibited, so that a solid electrolyte layer with high resistance is obtained.

It has been found that by optimizing the contact area between the support body constituent material and the solid electrolyte, that is, the specific surface area inside the support body, the occurrence of cracks inside the solid electrolyte layer can be suppressed, and the permeability of the solid electrolyte slurry into the support body can be improved. As a result, the resistance of the solid electrolyte layer can be reduced.

In the embodiment of the present invention, the specific surface area per volume by the permeation method is adopted as an index for measuring the specific surface area inside the support body. The specific surface area by the permeation method is determined from the flow rate and the pressure loss when air flows in the thickness direction of the support body. That is, it is possible to measure the surface area of the portion through which air can flow inside the support body.

When the specific surface area per volume by the permeation method is large, it indicates that the surface area inside the support body into which the solid electrolyte slurry can permeate is large, that is, the contact area between the support body constituent material and the solid electrolyte is large.

The support body of the present invention has a specific surface area per volume controlled within a range of 0.1 to 1.0 $m^2/cm^3$. Furthermore, the specific surface area per volume is more preferably in the range of 0.15 to 0.9 $m^2/cm^3$ from the viewpoint of suppressing an increase in resistance due to generation of cracks inside the solid electrolyte layer and uneven filling of the solid electrolyte in the support body in the thickness direction.

The support body having a specific surface area per volume in the above range can support and reinforce the solid electrolyte by the support body, and thus can withstand strain when the solid electrolyte slurry is dried. In addition, the solid electrolyte slurry can be uniformly held. As a result, generation of cracks inside the solid electrolyte layer can be suppressed. Due to the above effect, it is possible to maintain the pass line of the carrier ions inside the formed solid electrolyte layer and to suppress an increase in resistance. That is, by using this support body, the internal resistance of the all-solid-state battery can be reduced.

When the specific surface area per volume of the support body is less than 0.1 $m^2/cm^3$, the contact area between the support body constituent material and the solid electrolyte is small, so that the effect of using the support body is reduced, or the solid electrolyte slurry cannot be uniformly held inside the support body, and cracks are generated when the solid electrolyte slurry is dried. As a result, the formed pass line of the carrier ions is cut.

On the other hand, in a case where the specific surface area per volume of the support body is more than 1.0 $m^2/cm^3$, the contact area between the support body constituent material and the solid electrolyte is large, that is, the resistance at the time of allowing the substance to permeate in the thickness direction is high, so that the solid electrolyte slurry is clogged inside the support body. As a result, the amount of the solid electrolyte that can be filled inside the support body decreases, and the resistance of the solid electrolyte layer increases.

The support body of the present invention is constituted by paper or nonwoven fabric. The reason is as follows.

Paper refers to paper produced by sticking plant fibers or other fibers. In addition, the nonwoven fabric refers to a sheet-like material formed by treating various fiber webs such as natural, regenerated, and synthetic fibers by mechanical, chemical, thermal, or a combination thereof without using a loom, and joining constituent fibers to each other by an adhesive or a fusion force of the fibers themselves.

That is, since paper or a nonwoven fabric has a configuration in which fibers are randomly arranged, the paper or the nonwoven fabric has innumerable voids of various sizes and through holes of various sizes therein. Therefore, the applied solid electrolyte slurry can spread not only in the thickness direction but also in the plane direction. That is, some of the applied solid electrolytes remain on the surface of the support body, some remain inside the support body, and some pass through the through hole from the front surface side and reach the back surface side.

Therefore, in the solid electrolyte layer produced using paper or a nonwoven fabric as a support body, the solid electrolyte is filled not only on the surface of the support body but also inside the support body, and a good carrier ion pass line can be formed. As a result, the resistance of the solid electrolyte layer can be reduced, and the interface resistance between the solid electrolyte layer and the positive electrode or the negative electrode can be reduced. As a result, the internal resistance of the all-solid-state battery can be reduced.

In addition, the thickness of the support body of the present invention is preferably in the range of 5 to 40 $\mu$m. The thickness is more preferably in the range of 8 to 35 $\mu$m.

In a case where the thickness is less than 5 $\mu$m, since the thickness of the solid electrolyte layer becomes thin, it becomes difficult to prevent a short circuit between the positive electrode and the negative electrode, or the support body cannot be filled with the solid electrolyte in an amount necessary for forming the solid electrolyte layer. In addition, in order to increase the inter-electrode distance for the purpose of preventing short circuit, a thick solid electrolyte layer can be formed on the surface of the support body, but a layer of only the solid electrolyte is generated. That is, the portion without the support body cannot suppress the strain of the solid electrolyte layer generated during drying, which may lead to generation of cracks.

On the other hand, in a case where the thickness is more than 40 $\mu$m, the thickness of the solid electrolyte layer increases, which does not contribute to miniaturization of the all-solid-state battery.

The basis weight of the support body is preferably in the range of 1.0 to 15.0 $g/m^2$. More preferably, it is in the range of 2.0 to 13.0 $g/m^2$.

In a case where the basis weight is less than 1.0 $g/m^2$, the number of fibers constituting the support body decreases, and voids in the support body increase. Therefore, the solid electrolyte does not stay on the support body, and it becomes difficult to uniformly support and reinforce the solid electrolyte, and the reinforcing effect of the solid electrolyte layer by the support body cannot be obtained.

On the other hand, in a case where the basis weight is more than 15.0 g/m$^2$, the number of fibers constituting the support body increases, the permeability of the solid electrolyte slurry into the support body is deteriorated, and the solid electrolyte may not be sufficiently filled in the support body. Therefore, the resistance of the solid electrolyte layer increases.

In the support body according to the present invention, the tensile strength of the support body is preferably 1.0 N/15 mm or more. When the tensile strength is less than 1.0 N/15 mm, the support body is easily broken in a case of being filled with the solid electrolyte.

From the viewpoint of maintaining the form of the support body and tensile strength, it is desirable that the support body contains fibers having adhesive force. Examples of the fiber having adhesive force include fibers having fibrils on the fiber surface (hereinafter, fibrillated fibers), synthetic resin binders, and the like.

For example, the adhesive force of fibrillated cellulose fibers includes a physical bond due to entanglement between cellulose fibers and a chemical bond due to a hydrogen bond of a hydroxyl group of cellulose.

In addition, the adhesive force of fibrillated polyamide fibers and acrylic fibers has physical bond due to entanglement between fibers.

Bonding by any fiber is preferable because it contributes to maintenance of the form of the support body and expression of tensile strength.

Examples of the synthetic resin binder fibers include those in which a fiber state is maintained in a state in which a support body is formed, and those in which a fiber state cannot be maintained, and for example, a film-like synthetic resin binder fiber is formed. The synthetic resin binder fiber holding the fiber state in the state of forming the support body is formed is a preferable binder fiber in that permeability is hardly inhibited and the tensile strength of the support body can be improved.

The synthetic resin binder fiber holding the fiber shape in the state of forming the support body exhibits adhesive force by thermally bonding the fiber entanglement point. For this reason, the synthetic resin binder fibers holding the fiber state as the constituent material of the support body can reduce the breakage when forming the solid electrolyte layer, and adhere only the fiber contact points, so that the permeation of the solid electrolyte slurry into the support body is hardly inhibited.

On the other hand, in a synthetic resin binder fiber that cannot maintain a fiber state in a state where a support body is formed, the fiber is changed into a film shape by heat in a support body production process, and the resin is melted by application of heat in the vicinity of a melting point or a softening point of the resin constituting the fiber, and is fused at an entangling point of the fiber. That is, in a case where a binder that is not in a fiber state is used in a state where the support body is formed, the binder component fills voids, for example, by forming a large number of film layers in the fiber gaps of the support body in expressing the binder function. As a result, there is a case where the permeation of the solid electrolyte into the support body is inhibited, and it is necessary to pay attention to the mixing amount in a case where the synthetic resin binder fiber that cannot maintain a fiber state in a state where a support body is formed is used.

The material that can be used as the fiber having adhesive force is not particularly limited as long as it does not repel the solid electrolyte slurry, does not adversely affect the solid electrolyte physically and chemically, and is a fiber having insulating properties, and examples thereof include beaten cellulose fibers, beaten polyamide fibers, fibrillated fibers such as beaten acrylic fibers, polyamide binder fibers, polyester binder fibers, polyethylene binder fibers, polypropylene-polyethylene core-sheath type binder fibers, and the like. In addition, one or more kinds of fibers selected from these fibers can be used.

The material that can be used as the other constituent material is not particularly limited as long as it does not repel the solid electrolyte slurry, does not adversely affect the solid electrolyte physically and chemically, and is a fiber having insulating properties, and examples thereof include organic fibers such as cellulose fibers, polyamide fibers, polyester fibers, polypropylene fibers, and acrylic fibers, and inorganic fibers such as glass fibers and alumina fibers. In addition, one or more kinds of fibers selected from these fibers can be used. By using these fibers, a support body having excellent filling properties of the solid electrolyte can be obtained.

As a method for setting the specific surface area per volume in the range of 0.1 to 1.0 m$^2$/cm$^3$, for example, in the case of fibrillated fibers, it is possible to use fibers whose CSF value is controlled to 1 to 500 ml. In addition, in the case of fibers having no fibrils on the fiber surface, fibers having an average fiber diameter of 1 to 15 $\mu$m may be used. However, the present invention is not limited thereto as long as the specific surface area per volume can be in the range of 0.1 to 1.0 m$^2$/cm$^3$.

The method for producing the support body is not particularly limited, and the support body can be produced by a dry method or a wet method, but a papermaking method in which fibers dispersed in water are deposited on a wire, and dehydrated and dried to make a paper sheet is preferable from the viewpoint of homogeneity of the formation of the support body or the like.

In the embodiment for carrying out the present invention, paper or a wet nonwoven fabric formed using a papermaking method was employed as a method for producing a support body. The papermaking format of the support body is not particularly limited as long as it can satisfy the porosity, the specific surface area per volume, the thickness, and the basis weight, and papermaking formats such as Fourdrinier papermaking, tanmo papermaking, and cylinder papermaking can be adopted, and a plurality of layers formed by these papermaking methods may be combined. In addition, in papermaking, additives such as a dispersant, an antifoaming agent, and a paper strength enhancer may be added, and post-processing such as paper strength enhancement processing, lyophilic processing, calendering, thermal calendering, and embossing may be performed after formation of the paper layer.

(Method for Producing Support Body and All-Solid-State Battery and Method for Measuring Properties)

The method for producing the support body and the all-solid-state battery of the present embodiment and the method for measuring the properties were performed under the following conditions and methods.

[CSF Value]

The CSF values were measured according to "JIS P8121-2 'Pulps-Determination of drainability-Part 2: "Canadian Standard" freeness method' (ISO5267-2 'Pulps-Determination of drainability-Part 2: "Canadian Standard" freeness method')".

[Average Fiber Diameter]

The fiber widths of 100 fibers were randomly measured using a scanning electron microscope, and the average value thereof was taken as the average fiber diameter ($\mu$m).

[Thickness]

The thickness of one support body was measured at equal intervals using a dial thickness gauge G type (measurement reaction force: 2 N, probe: $\varphi$10 mm), and the average value of the measurement points was taken as the thickness ($\mu$m) of the support body.

[Basis Weight]

The basis weight of the support body in a bone dry condition was measured by a method defined in "JIS C 2300-2 'Cellulosic papers for electrical purposes-Part 2: Methods of test' 6 basis weight".

[Density]

The density of the support body was calculated using the following formula.

$$\texttt{Density (g/cm}^3\texttt{)} = \texttt{W/T}$$

W: basis weight (g/m$^2$), T: thickness ($\mu$m)

[Porosity]

The porosity of the support body was calculated using the following formula. Note that, in a case where a plurality of materials constituting the support body was mixed, the average specific gravity of the constituent fibers was determined by performing calculation proportional to the mixing ratio, and then the porosity of the support body was calculated.

$$\texttt{Porosity (\%)} = \texttt{(1 - (D/S))} \times \texttt{100}$$

D: support body density (g/cm$^3$), S: specific gravity of constituent fiber (g/cm$^3$)

[Specific Surface Area per Volume]

The specific surface area (m$^2$/g) per mass was measured by a gas permeation method of Parm-Porometer manufactured by PMI. The specific surface area (m$^2$/cm$^3$) per volume was calculated from the product of the obtained

specific surface area (m$^2$/g) per mass and the measured density (g/cm$^3$) of the support body.

[Tensile Strength]

The maximum tensile load in the longitudinal direction (manufacturing direction) of the support body was measured with a test width of 15 mm by a method defined in "JIS P 8113 'Paper and board-Determination of tensile properties-Part 2: Constant rate of elongation method' (ISO1924-2 'Paper and board-Determination of tensile properties-Part 2: Constant rate of elongati on method'), and the measured value was defined as the tensile strength of the support body.

[Step of Producing All-Solid-State Battery]

An all-solid-state battery was produced using the support bodies of Examples, Comparative Examples, Conventional Examples, and Reference Example illustrated below.
A specific production method is as follows.

(Positive Electrode Structure)

A LiNiCoAlO$_2$ ternary powder was used as a positive electrode active material, a Li$_2$S-P$_2$S$_5$ amorphous powder was used as a sulfide-based solid electrolyte, and carbon fibers were used as a conduction aid, and mixed. A dehydrated xylene solution in which SBR (styrene butadiene rubber) was dissolved as a binder was mixed with the mixed powder to produce a positive electrode coating liquid. A positive electrode coating liquid was applied to an aluminum foil current collector as a positive electrode current collector, dried, and further rolled to obtain a positive electrode structure.

(Negative Electrode Structure)

Graphite as a negative electrode active material, Li$_2$S-P$_2$S$_5$ amorphous powder as a sulfide-based solid electrolyte, PVdF (polyvinylidene fluoride) as a binder, and NMP (N-methyl-2-pyrrolidone) as a solvent were used and mixed to produce a negative electrode coating liquid. A copper foil current collector as a negative electrode current collector was coated with a negative electrode coating liquid, dried, and further rolled to obtain a negative electrode structure.

(Solid Electrolyte Layer)

A solid electrolyte slurry was produced by mixing Li$_2$S-P$_2$S$_5$ amorphous powder as a sulfide-based solid electrolyte, SBR as a binder, and xylene as a solvent.
Solid electrolyte slurry was applied to the support bodies of Examples, Comparative Examples, Conventional Examples, and Reference Example illustrated below, and dried to obtain a solid electrolyte layer.

[Evaluation of Self-Standing Property of Solid Electrolyte Layer]

Self-standing property of each of the produced solid electrolyte layers was evaluated.
It was evaluated whether the produced solid electrolyte layer having a size of 92 mm × 62 mm could be lifted horizontally. A case where the solid electrolyte layer could be horizontally lifted while maintaining the shape was defined as ○, and a case where the state was not maintained when the solid electrolyte layer was horizontally lifted was defined as ×.

[Production of All-Solid-State Battery]

A negative electrode structure having a size of 88 mm × 58 mm, a solid electrolyte layer having a size of 92 mm × 62 mm, and a positive electrode structure having a size of 87 mm × 57 mm were laminated, subjected to dry lamination, and bonded to obtain a unit cell of an all-solid-state battery.
The obtained unit cell was placed in an aluminum laminate film to which a terminal was attached, degassed and heat-sealed, and packed.

[Method for Evaluating All-Solid-State Battery]

Specific performance evaluation of the produced all-solid-state battery was performed under the following conditions and methods.

[Resistance]

The all-solid-state battery was charged up to 4.0 V at a current density of 0.1 C in an environment of 25°C, and impedance in a frequency range of 0.1 Hz to 1 MHz was measured using an LCR meter. The arc portion of the obtained Cole-Cole plot was fitted into a semicircular shape with the x axis as the base, and the numerical value of the portion where the right end of the semicircle and the x axis intersect was taken as the resistance value.

[Discharge Capacity]

The all-solid-state battery was charged up to 4.0 V at a current density of 0.1 C under an environment of 25°C, and then discharged up to 2.5 V at a current density of 0.1 C, and the discharge capacity at that time was measured.

Examples

Hereinafter, specific examples and the like of the support body according to the embodiment of the present invention will be described.

[Example 1]

Fourdrinier papermaking was performed using polyamide fibers having a CSF value of 10 ml to obtain a support body having a thickness of 35 $\mu$m, a basis weight of 15.0 g/m$^2$, and a density of 0.43 g/cm$^3$. The properties of the support body of Example 1 are summarized in Table 2.

[Example 2]

Using cellulose fibers having a CSF value of 20 ml, tanmo papermaking was performed. The obtained paper was calendered to obtain a support body having a thickness of 5 $\mu$m, a basis weight of 2.6 g/m$^2$, and a density of 0.52 g/cm$^3$. The properties of the support body of Example 2 are summarized in Table 2.

[Example 3]

Using a raw material obtained by mixing 80 mass% of polyester fibers having an average fiber diameter of 3 $\mu$m and 20 mass% of polyester binder fibers having an average fiber diameter of 4 $\mu$m, cylinder papermaking was performed to obtain a support body having a thickness of 9 $\mu$m, a basis weight of 2.0 g/m$^2$, and a density of 0.22 g/cm$^3$. The properties of the support body of Example 3 are summarized in Table 2.

[Example 4]

Using a raw material obtained by mixing 50 mass% of polyamide fibers having a CSF value of 100 ml and 50 mass% of cellulose fibers having a CSF value of 10 ml, Fourdrinier papermaking was performed to obtain a support body having a thickness of 35 $\mu$m, a basis weight of 13.0 g/m$^2$, and a density of 0.37 g/cm$^3$. The properties of the support body of Example 4 are summarized in Table 2.

[Example 5]

Using a raw material obtained by mixing 20 mass% of polyester fibers having an average fiber diameter of 3 $\mu$m and 80 mass% of polyester binder fibers having an average fiber diameter of 4 $\mu$m, tanmo papermaking was performed to obtain a support body having a thickness of 8 $\mu$m, a basis weight of 1.1 g/m$^2$, and a density of 0.14 g/cm$^3$. The properties of the support body of Example 5 are summarized in Table 2.

[Example 6]

Using a raw material obtained by mixing 30 mass% of cellulose fibers having a CSF value of 500 ml and 70 mass% of polyamide binder fibers having an average fiber diameter of 10 $\mu$m, cylinder papermaking was performed to obtain a support body having a thickness of 40 $\mu$m, a basis weight of 12.0 g/m$^2$, and a density of 0.30 g/cm$^3$. The properties of the support body of Example 6 are summarized in Table 2.

[Example 7]

Using a raw material obtained by mixing 50 mass% of acrylic fibers having a CSF value of 100 ml and 50 mass% of acrylic fibers having an average fiber diameter of 10 $\mu$m, tanmo papermaking was performed to obtain a support body having a thickness of 30 $\mu$m, a basis weight of 5.5 g/m$^2$, and a density of 0.18 g/cm$^3$. The properties of the support body of Example 7 are summarized in Table 2.

[Example 8]

Using a raw material obtained by mixing 30 mass% of a polypropylene fiber having an average fiber diameter of 1 $\mu$m and 70 mass% of a polypropylene-polyethylene core-sheath type fiber having an average fiber diameter of 15 $\mu$m, tanmo papermaking was performed to obtain a support body having a thickness of 20 $\mu$m, a basis weight of 7.5 g/m$^2$, and a density of 0.38 g/cm$^3$. The properties of the support body of Example 8 are summarized in Table 2.

[Example 9]

A raw material obtained by mixing 80 mass% of cellulose fibers having a CSF value of 1 ml and 20 mass% of polyester binder fibers having an average fiber diameter of 4 $\mu$m was used to perform Fourdrinier papermaking to obtain a support body having a thickness of 30 $\mu$m, a basis weight of 10.0 g/m$^2$, and a density of 0.33 g/cm$^3$. The properties of the support body of Example 9 are summarized in Table 2.

[Comparative Example 1]

Using cellulose fibers having a CSF value of 20 ml, tanmo papermaking was performed. The obtained paper was calendered to obtain a support body having a thickness of 4 $\mu$m, a basis weight of 2.0 g/m$^2$, and a density of 0.50 g/cm$^3$. The properties of the support body of Comparative Example 1 are summarized in Table 2.

[Comparative Example 2]

Using a raw material obtained by mixing 20 mass% of polyester fibers having an average fiber diameter of 3 $\mu$m and 80 mass% of polyester binder fibers having an average fiber diameter of 4 $\mu$m, tanmo papermaking was performed to obtain a support body having a thickness of 5 $\mu$m, a basis weight of 0.7 g/m$^2$, and a density of 0.14 g/cm$^3$. The properties of the support body of Comparative Example 2 are summarized in Table 2.

[Comparative Example 3]

Fourdrinier papermaking was performed using polyamide fibers having a CSF value of 100 ml to obtain a support body having a thickness of 40 $\mu$m, a basis weight of 16.0 g/m$^2$, and a density of 0.40 g/cm$^3$. The properties of the support body of Comparative Example 3 are summarized in Table 2.

[Comparative Example 4]

Using a raw material obtained by mixing 50 mass% of acrylic fibers having an average CSF value of 300 ml and 50 mass% of acrylic fibers having an average fiber diameter of 10 $\mu$m, tanmo papermaking was performed to obtain a support body having a thickness of 30 $\mu$m, a basis weight of 3.0 g/m$^2$, and a density of 0.10 g/cm$^3$. The properties of the support body of Comparative Example 4 are summarized in Table 2.

[Comparative Example 5]

Using a raw material obtained by mixing 30 mass% of a polypropylene fiber having an average fiber diameter of 1 $\mu$m and 70 mass% of a polypropylene-polyethylene core-sheath type fiber having an average fiber diameter of 10 $\mu$m, tanmo papermaking was performed to obtain a support body having a thickness of 20 $\mu$m, a basis weight of 8.5 g/m$^2$, and a density of 0.43 g/cm$^3$. The properties of the support body of Comparative Example 5 are summarized in Table 2.

[Comparative Example 6]

A raw material obtained by mixing 85 mass% of cellulose fibers having a CSF value of 0 ml and 15 mass% of polyester binder fibers having an average fiber diameter of 4 $\mu$m was used to perform Fourdrinier papermaking to obtain a support body having a thickness of 30 $\mu$m, a basis weight of 12.0 g/m$^2$, and a density of 0.40 g/cm$^3$. The properties of the support body of Comparative Example 6 are summarized in Table 2.

[Comparative Example 7]

Using a raw material obtained by mixing 15 mass% of cellulose fibers having a CSF value of 500 ml and 85 mass% of polyamide binder fibers having an average fiber diameter of 16 $\mu$m, cylinder papermaking was performed to obtain a support body having a thickness of 40 $\mu$m, a basis weight of 8.0 g/m$^2$, and a density of 0.20 g/cm$^3$. The properties of the support body of Comparative Example 7 are summarized in Table 2.

[Conventional Example 1]

A support body produced by a method similar to that described in Example 2 of Patent Literature 1 was produced to obtain a support body of Conventional Example 1. In Conventional Example 1, a polyimide film was etched to form a 200 $\mu$m square hole, thereby obtaining a support body having a thickness of 30 $\mu$m, a basis weight of 8.8 g/m$^2$, and a density of 0.29 g/cm$^3$. The properties of the support body of Conventional Example 1 are summarized in Table 2.

[Conventional Example 2]

Using a raw material obtained by mixing 85 mass% of polyester fibers having an average fiber diameter of 10 $\mu$m and 15 mass% of polyester binder fibers having an average fiber diameter of 10 $\mu$m, cylinder papermaking was performed with reference to the method for producing a support body described in Example 1 of Patent Literature 2 to obtain a support body having a thickness of 10 $\mu$m, a basis weight of 3.0 g/m$^2$, and a density of 0.30 g/cm$^3$. The properties of the support body of Conventional Example 2 are summarized in Table 2.

[Reference Example]

Using a raw material obtained by mixing 40 mass% of an acrylic fiber having a CSF value of 100 ml, 40 mass% of an acrylic fiber having an average fiber diameter of 10 $\mu$m, and 20 mass% of a polyvinyl alcohol fiber having an average fiber diameter of 10 $\mu$m, tanmo papermaking was performed to obtain a support body having a thickness of 15 $\mu$m, a basis weight of 3.0 g/m$^2$, and a density of 0.20 g/cm$^3$. The properties of the support body of Reference Example are summarized in Table 2.

The compounding fiber names and compounding ratios of the support bodies of Examples 1 to 9, Comparative Examples 1 to 7, Conventional Examples 1 to 2, and Reference Example described above are illustrated in Table 1.

[Table 1]

| | | Support body structure | | | Support body structure | |
|---|---|---|---|---|---|---|
| | | Fiber name | Compounding ratio | | Fiber name | Compounding ratio |
| | | | wt% | | | wt% |
| | Example 1 | Polyamide | 100 | Comparative Example 1 | Cellulose | 100 |
| | Example 2 | Cellulose | 100 | Comparative Example 2 | Polyester<br>Polyester binder | 20<br>80 |
| | Example 3 | Polyester<br>Polyester binder | 80<br>20 | Comparative Example 3 | Polyamide | 100 |
| | Example 4 | Polyamide<br>Cellulose | 50<br>50 | Comparative Example 4 | Acrylic | 100 |
| | Example 5 | Polyester<br>Polyester binder | 20<br>80 | Comparative Example 5 | Polypropylene<br>Polypropylene-polyethylene core-sheath | 30<br>70 |
| | Example 6 | Cellulose<br>Polyamide binder | 30<br>70 | Comparative Example 6 | Cellulose<br>Polyester binder | 85<br>15 |

(continued)

|  | | Support body structure | |  | | Support body structure | |
|---|---|---|---|---|---|---|---|
|  | | Fiber name | Compounding ratio | | | Fiber name | Compounding ratio |
|  | | | wt% | | | | wt% |
| Example 7 | | Acrylic | 100 | Comparative Example 7 | | Cellulose<br>Polyamide binder | 15<br>85 |
| Example 8 | | **Polypropylene**<br>Polypropylene-polyethylene core-sheath | 30<br>70 | Conventional Example 1 | | Polyimide film was etched to form 200 $\mu$ m square hole | |
| Example 9 | | Cellulose<br>Polyester binder | 80<br>20 | Conventional Example 2 | | Polyester<br>Polyester binder | 85<br>15 |
|  | | | | Reference Example | | Acrylic<br>Polyvinyl alcohol | 80<br>20 |

Table 2 illustrates the evaluation results of the properties of each support body, the self-standing property of the solid electrolyte layer, and the battery properties of Examples, Comparative Examples, Conventional Examples, and Reference Example described above.

[Table 2]

| | Support body property | | | | | | Solid electrolyte layer | Battery property | |
|---|---|---|---|---|---|---|---|---|---|
| | Thickness | Basis weight | Density | Porosity | Specific surface area | Tensile strength | Self-standing property | Resistance | Discharge capacity |
| | μm | g/m² | g/cm³ | % | m²/cm³ | N/15mm | - | Ω·cm² | mAh/g |
| Example 1 | 35 | 15.0 | 0.43 | 70 | 0.8 | 12.1 | ○ | 859 | 60 |
| Example 2 | 5 | 2.6 | 0.52 | 65 | 0.6 | 3.3 | ○ | 799 | 74 |
| Example 3 | 9 | 2.0 | 0.22 | 84 | 0.12 | 1.0 | ○ | 784 | 80 |
| Example 4 | 35 | 13.0 | 0.37 | 75 | 0.7 | 10.2 | ○ | 766 | 82 |
| Example 5 | 8 | 1.1 | 0.14 | 90 | 0.16 | 2.0 | ○ | 898 | 57 |
| Example 6 | 40 | 12.0 | 0.30 | 76 | 0.2 | 6.8 | ○ | 832 | 70 |
| Example 7 | 30 | 5.5 | 0.18 | 84 | 0.3 | 3.8 | ○ | 754 | 84 |
| Example 8 | 20 | 7.5 | 0.38 | 60 | 0.3 | 9.4 | ○ | 829 | 71 |
| Example 9 | 30 | 10.0 | 0.33 | 77 | 1.0 | 5.1 | ○ | 836 | 66 |
| Comparative Example 1 | 4 | 2.0 | 0.50 | 67 | 0.6 | 1.9 | ○ | - | - |
| Comparative Example 2 | 5 | 0.7 | 0.14 | 90 | 0.2 | 1.2 | ○ | 1,541 | 44 |
| Comparative Example 3 | 40 | 16.0 | 0.40 | 72 | 0.7 | 8.8 | × | 11,136 | 1 |
| Comparative Example 4 | 30 | 3.0 | 0.10 | 93 | 0.3 | 1.4 | ○ | 1,311 | 43 |
| Comparative Example 5 | 20 | 8.5 | 0.43 | 55 | 0.4 | 9.7 | × | 12,391 | 2 |
| Comparative Example 6 | 30 | 12.0 | 0.40 | 73 | 1.2 | 9.4 | × | 12,999 | 3 |
| Comparative Example 7 | 40 | 8.0 | 0.20 | 83 | 0.04 | 5.5 | ○ | 1,132 | 48 |
| Conventional Example 1 | 30 | 8.8 | 0.29 | 79 | 0.02 | 6.1 | ○ | 1,563 | 47 |
| Conventional Example 2 | 10 | 3.0 | 0.30 | 78 | 0.06 | 0.7 | ○ | 1,097 | 48 |
| Reference Example | 15 | 3.0 | 0.20 | 83 | 0.4 | 5.0 | ○ | 1,241 | 48 |

Hereinafter, the evaluation results of the all-solid-state batteries using the support bodies of Examples, Comparative Examples, Conventional Examples, and Reference Example will be described in detail.

The solid electrolyte layer using the support body of each Example could form a solid electrolyte layer having self-standing property.

It can be seen that the all-solid-state battery using the support body of each Example has a low resistance and a high discharge capacity, and functions as a battery.

The support body of Comparative Example 1 is thinner than the support body of each Example in thickness. It is considered that since the support body of Comparative Example 1 was as thin as 4 μm in thickness, a short circuit between the positive electrode and the negative electrode could not be prevented. Note that, since a short circuit occurred, various battery evaluations of the all-solid-state battery using the support body of Comparative Example 1 could not be performed. That is, from the comparison between each Example and Comparative Example 1, it is found that the thickness of the support body is preferably 5 μm or more.

The all-solid-state battery using the support body of Comparative Example 2 has higher resistance and lower discharge capacity than the all-solid-state battery using the support body of each Example. In addition, the basis weight of the support body of Comparative Example 2 is lower than that of the support body of each Example.

It is considered that since the basis weight of the support body of Comparative Example 2 was as low as 0.7 g/m$^2$, the solid electrolyte could not uniformly stay on the support body due to the influence of the small number of fibers constituting the support body, and a uniform solid electrolyte layer could not be obtained.

That is, comparison between each Example and Comparative Example 2 illustrates that the basis weight of the support body is preferably 1.0 g/m$^2$ or more.

The support body of Comparative Example 3 has a basis weight higher than that of the support body of each Example. Since the basis weight of the support body of Comparative Example 3 was as high as 16.0 g/m$^2$, the solid electrolyte slurry could not permeate into the support body and remained on the surface of the support body due to the influence of the large number of fibers constituting the support body. As a result, the solid electrolyte slurry was dried while remaining on the surface of the support body, and the solid electrolyte layer was formed on the support body surface. Then, since the solid electrolyte layer formed on the surface of the support body was dried in the absence of the support body, the solid electrolyte layer was not reinforced by the support body, so that cracks occurred, and when the solid electrolyte layer was lifted up, breakage occurred, and there was no self-standing property.

Although the solid electrolyte layer using the support body of Comparative Example 3 was cracked, an all-solid-state battery could be produced by superposing the solid electrolyte layer on the positive electrode and the negative electrode.

The all-solid-state battery using the support body of Comparative Example 3 had a very high resistance as compared with the all-solid-state battery using the support body of each Example, and the battery could not be discharged. This is considered to be because the basis weight was as high as 16.0 g/m$^2$, and inside the solid electrolyte layer was not filled with the solid electrolyte.

Comparison between each Example and Comparative Example 3 illustrates that the basis weight of the support body is preferably 15.0 g/m$^2$ or less.

The all-solid-state battery using the support body of Comparative Example 4 has higher resistance and lower discharge capacity than the all-solid-state battery using the support body of each Example. In addition, the support body of Comparative Example 4 has a higher porosity than the support body of each Example.

It is considered that since the support body of Comparative Example 4 had a high porosity of 93%, the solid electrolyte could not uniformly stay on the support body due to the small amount of the support body constituent material, and a uniform solid electrolyte layer could not be obtained.

That is, comparison between each Example and Comparative Example 4 illustrates that the porosity of the support body is preferably 90% or less.

The support body of Comparative Example 5 has a porosity lower than that of each Example. Since the support body of Comparative Example 5 had a low porosity of 55%, when the solid electrolyte slurry was applied to the support body of Comparative Example 5, the solid electrolyte slurry was clogged inside the support body and remained on the surface of the support body. Therefore, similar to Comparative Example 3, the solid electrolyte layer was not reinforced by the support body, so that cracks were generated. As a result, when the solid electrolyte layer was lifted, breakage occurred, and there was no self-standing property.

Although the solid electrolyte layer using the support body of Comparative Example 5 was cracked, an all-solid-state battery could be produced by superposing the solid electrolyte layer on the positive electrode and the negative electrode.

The all-solid-state battery using the support body of Comparative Example 5 had a very high resistance as compared with the all-solid-state battery using the support body of each Example, and the battery could not be discharged. This is considered to be because the porosity was as low as 55%, and the solid electrolyte layer was not filled with the solid electrolyte.

Comparison between each Example and Comparative Example 5 illustrates that the porosity of the support body is preferably 60% or more.

The support body of Comparative Example 6 has a larger specific surface area per volume than each of Examples. Since the support body of Comparative Example 6 had a large specific surface area per volume of 1.2 $m^2/cm^3$, permeability of the solid electrolyte slurry in the thickness direction of the support body was poor, and the solid electrolyte slurry was clogged inside the support body. As a result, similarly to Comparative Example 3 and Comparative Example 5, the solid electrolyte layer was formed on the surface of the support body, and the solid electrolyte layer was not reinforced by the support body, so that cracks were generated. As a result, when the solid electrolyte layer was lifted, breakage occurred, and there was no self-standing property.

Although the solid electrolyte layer using the support body of Comparative Example 6 was cracked, an all-solid-state battery could be produced by superposing the solid electrolyte layer on the positive electrode and the negative electrode.

The all-solid-state battery using the support body of Comparative Example 6 had a very high resistance as compared with the all-solid-state battery using the support body of each Example, and the battery could not be discharged. This may be because the specific surface area per volume was as large as 1.2 $m^2/cm^3$, and the solid electrolyte layer was not filled with the solid electrolyte.

Comparison between each Example and Comparative Example 6 illustrates that the specific surface area per volume of the support body is preferably 1.0 $m^2/cm^3$ or less.

The all-solid-state battery using the support body of Comparative Example 7 has higher resistance and lower discharge capacity than the all-solid-state battery using the support body of each Example. In addition, the support body of Comparative Example 7 has a smaller specific surface area per volume than the support body of each Example.

Since the specific surface area per volume of the support body of Comparative Example 7 is as small as 0.04 $m^2/cm^3$, the contact area between the support body constituent material and the solid electrolyte is small, the effect of using the support body is reduced, and it is considered that a uniform solid electrolyte layer could not be obtained. Comparison between each Example and Comparative Example 7 illustrates that the specific surface area per volume of the support body is preferably 0.1 $m^2/cm^3$ or more.

The support body of Conventional Example 1 is a support body in which a through hole is formed in a film, unlike the support body which is paper or nonwoven fabric of each Example. The through hole of the support body of Conventional Example 1 can be filled with the solid electrolyte, but only the inside of the formed through hole can be filled with the solid electrolyte. In addition, in the solid electrolyte layer constituted by the support body of Conventional Example 1, it is considered that an interface between the film as an insulator and the positive electrode or the negative electrode exists at an interface between the positive electrode or the negative electrode and the solid electrolyte layer. In addition, the support body of Conventional Example 1 has a small specific surface area per volume of 0.02 $m^2/cm^3$. Due to these influences, it is considered that the all-solid-state battery using the support body of Conventional Example 1 had higher resistance and lower discharge capacity as compared with the all-solid-state battery using the support body of each Example.

From the comparison between each Example and Conventional Example 1, it is found that paper or a nonwoven fabric is suitable as a support body in order to reduce the resistance of the all-solid-state battery.

Since the support body of Conventional Example 2 had a small specific surface area of 0.06 $m^2/cm^3$, the solid electrolyte could not be uniformly retained when the solid electrolyte slurry was applied to the support body. Therefore, the all-solid-state battery using the support body of Conventional Example 2 had high resistance and small discharge capacity.

The all-solid-state battery using the support body of Reference Example has higher resistance and lower discharge capacity than the all-solid-state battery using the support body of each example.

The support body of Reference Example is a support body in which 20 mass% of polyvinyl alcohol fiber is mixed in addition to acrylic fiber. Polyvinyl alcohol fibers are effective fibers for improving tensile strength. The polyvinyl alcohol fiber can reinforce the fiber contact point and improve the tensile strength of the support body by the shape change due to wet heat. However, in a state where the support body is formed, the polyvinyl alcohol fiber forms a film layer inside the support body rather than in a fiber state, and fills fiber gaps. In addition, since many fiber gaps are filled due to the effect of mixing 20 mass% of polyvinyl alcohol fibers, it is considered that the permeation of the solid electrolyte slurry into the support body is inhibited.

That is, from the comparison between Example 7 and Reference Example, it is found that the mixing amount of the synthetic resin binder fibers that cannot maintain the fiber state is preferably less than 20 mass%.

The above-described embodiment example is merely an example, and for example, the composition and the like of the carrier ion, the solid electrolyte, the positive electrode, and the negative electrode can be appropriately changed by those skilled in the art.

As described above, by using paper or a nonwoven fabric in which the porosity of the support body is 60 to 90% and the specific surface area per volume is 0.1 to 1.0 $m^2/cm^3$, it is possible to obtain a support body having voids in which a required amount of solid electrolyte can be filled in the support body. Further, by achieving both good permeability of the solid electrolyte into the support body and uniform retention of the solid electrolyte, it is possible to obtain a support body capable of suppressing crack generation, contributing to formation of a pass line of carrier ions continuous in the thickness direction and the plane direction, and contributing to reduction in interface resistance between the positive electrode or the negative electrode and the solid electrolyte layer. By using this support body, an all-solid-state battery having low resistance can be obtained.

**Claims**

1. A secondary battery support body as a support body included in a solid electrolyte layer of a secondary battery, the secondary battery support body being
   paper or nonwoven fabric having:

   a porosity of 60 to 90%; and
   a specific surface area per volume in a range of 0.1 to 1.0 $m^2/cm^3$.

2. The secondary battery support body according to claim 1, wherein

   the support body has a thickness of 5 to 40 $\mu$m, and
   a basis weight in a range of 1.0 to 15.0 $g/m^2$.

3. A secondary battery comprising
   a solid electrolyte layer having the secondary battery support body according to claim 1 or 2.

## INTERNATIONAL SEARCH REPORT

| International application No. |
| --- |
| **PCT/JP2023/010066** |

| A. | CLASSIFICATION OF SUBJECT MATTER |
| --- | --- |

*H01M 50/44*(2021.01)i; *H01M 10/052*(2010.01)i; *H01M 10/0562*(2010.01)i; *H01M 50/429*(2021.01)i;
*H01M 50/489*(2021.01)i; *H01M 50/491*(2021.01)i
FI: H01M50/44; H01M50/491; H01M50/489; H01M50/429; H01M10/052; H01M10/0562

According to International Patent Classification (IPC) or to both national classification and IPC

| B. | FIELDS SEARCHED |
| --- | --- |

Minimum documentation searched (classification system followed by classification symbols)

H01M50/44; H01M10/052; H01M10/0562; H01M50/429; H01M50/489; H01M50/491

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-31789 A (NIPPON KODOSHI CORP.) 07 March 2016 (2016-03-07)<br>paragraphs [0012]-[0015], [0047]-[0049], table 1 | 1-3 |
| X | JP 2020-77488 A (HONDA MOTOR CO., LTD.) 21 May 2020 (2020-05-21)<br>paragraphs [0048]-[0058], table 1 | 1-3 |
| A | JP 2002-151149 A (JAPAN VILENE CO., LTD.) 24 May 2002 (2002-05-24) | 1-3 |
| A | WO 2021/229981 A1 (NIPPON SHEET GLASS CO., LTD.) 18 November 2021 (2021-11-18) | 1-3 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 May 2023** | **06 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/010066**

| Patent document cited in search report | | | Publication date (day/month/year) | Patent family member(s) | Publication date (day/month/year) |
|---|---|---|---|---|---|
| JP | 2016-31789 | A | 07 March 2016 | (Family: none) | |
| JP | 2020-77488 | A | 21 May 2020 | US 2020/0144661 A1 paragraphs [0058]-[0082], table 1 CN 111146495 A | |
| JP | 2002-151149 | A | 24 May 2002 | (Family: none) | |
| WO | 2021/229981 | A1 | 18 November 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017103146 A
- JP 2016031789 A
- JP 2020077488 A
- JP 2020024860 A
- JP 2020161243 A
- JP 2018088375 A